# EUROPÄISCHE PATENTSCHRIFT

(11) **EP 1 564 465 B1**
(45) Veröffentlichungstag und Bekanntmachung des Hinweises auf die Patenterteilung: **17.01.2007**
(21) Anmeldenummer: 04026476.4
(22) Anmeldetag: 08.11.2004
(51) Int. Cl.: F16K 31/10, F15B 13/044, F15B 13/04

(54) **Magnetdoppelventil**
Electromagnetic dual valve
Soupape double électromagnétique

(30) Priorität: 17.02.2004 DE 202004002432 U
(43) Veröffentlichungstag der Anmeldung: 17.08.2005
(73) Patentinhaber: HAWE Hydraulik GmbH & Co. KG, 81673 München (DE)
(72) Erfinder: Neumair, Georg, Dipl.-Ing. (FH), 85402 Thalhausen (DE); Zwingler, Engelbert, 83620 Feldkirchen-Westerham (DE)
(74) Vertreter: Grünecker, Kinkeldey, Stockmair & Schwanhäusser Anwaltssozietät

(56) Entgegenhaltungen:
- EP-A- 0 527 393
- EP-A- 1 036 965
- DE-B- 1 085 736
- US-A- 2 708 561

## Beschreibung

Die Erfindung betrifft ein Magnetdoppelventil der im Oberbegriff des Anspruchs 1 angegebenen Art.

Solche, aus der Praxis bekannte Magnetdoppelventile werden beispielsweise als Ventileinsatzbaugruppe konzipiert, die in einen Strömungswege enthaltenden Körper in zu den Strömungswegen führende Aufnahmebohrungen eingesetzt wird, beispielsweise um mittels der beiden Ventilglieder bestimmte Ventilfunktionen zu steuern. Da der gemeinsame Magnet beide Ventilglieder im Schließsinn gegen Ventilsitze zu betätigen hat, und wegen unvermeidlicher Fertigungstoleranzen die Betätigungshübe bis zu den Schließpositionen bzw. die Gegenkräfte der Ventilglieder unterschiedlich sein können, wird die Gleitpassung des Kraftübertragungsgliedes in der Schiebeführung so eng wie möglich gewählt, damit die Schiebeführung ein Schrägstellen des Kraftübertragungsgliedes weitgehend ausschließt. Damit werden gegebenenfalls die Schließpositionen und die Schließkräfte nicht zuverlässig definiert, denn aufgrund unvermeidlicher Fertigungs- oder Montagetoleranzen bei den Ventilsitzen kann ein Schließglied seine dichte Schließposition nicht zuverlässig erreichen, wenn das Kraftübertragungsglied wegen seiner engen Gleitpassung nur das früher aufgesetzte Ventilglied korrekt beaufschlagt.

Aus EP 1 036 965 A ist es bekannt, das Kraftübertragungsglied, allerdings zum Verstellen der Ventilglieder in Öffnungsrichtung, als beweglichen Waagebalken auszubilden, der sich unter der Kraft eines gemeinsamen Magneten abhängig davon schrägstellen kann, welches Ventilglied schwerer zu öffnen ist. Eine stationäre Widerlagerfläche für den Waagebalken bringt auch das andere Ventilglied über den Waagebalken in die Öffnungsposition.

Von Interesse sind ferner: EP 0 527 393 A, US 2 708 561 A, DE 1 085 736 B.

Der Erfindung liegt die Aufgabe zugrunde, ein Magnetdoppelventil der eingangs genannten Art mit verbesserter Funktionssicherheit und einfachem Aufbau zu schaffen, insbesondere ein Magnetdoppelventil, das einen Kurzhub-Magneten zum Verstellen der beiden Ventilglieder in ihre Schließpositionen aufweist.

Die gestellte Aufgabe wird mit den Merkmalen des Anspruchs 1 gelöst.

In Kombination führen das radiale Sicherheitsspiel zwischen dem Schaft des Kraftübertragungsgliedes und der Schiebeführung und das die Magnetkraft übertragende Kippgelenk überraschend zu langer Standzeit mit störungsfreiem Betrieb des Magnetdoppelventils. Selbst wenn die Ventilglieder infolge Toleranzen in Bewegungsrichtung des Ankers unterschiedliche Schließpositionen haben sollten, wird die vom Magneten erzeugte Magnetkraft so auf beide Ventilglieder verteilt, dass jedes Ventilglied seine Schließposition sicher einnimmt und auch mit der erforderlichen Schließkraft aufsitzt und dicht ist. Das Übertragungsglied kann sich aufgrund des Sicherheitsspieles in der Schiebeführung etwas schrägstellen. Bei einer Schrägstellung wandert der Kraftübertragungspunkt für die Magnetkraft im Kippgelenk gegebenenfalls aus einer zunächst zentralen Lage sogar zu der Seite, an der das früher aufsetzende Ventilglied vorliegt, jedoch nur um ein kleineres Maß als der Breite der Flächen im Kippgelenk. Dadurch wird auch das später aufsetzende Ventilglied zuverlässig in seine Schließposition gebracht, und wird auch im Kippgelenk keine nennenswerte Querkraft aus der Magnetkraft erzeugt, die das Kraftübertragungsglied in der Schiebeführung verklemmen könnte.

Zweckmäßig weist das Kippgelenk am Anker oder an einem axial geführten Ankerstößel und am Schaft direkt oder indirekt einander kontaktierende erste und zweite Anlageflächen in einer speziellen geometrischen Paarung auf. Diese Paarung kann sein: Eben/konvex oder konkav/konkav oder konvex/konkav oder konvex/konvex, wobei die jeweils konvexe oder konkave Fläche zumindest eine Bogenkrümmung in der Ebene aufweist, in der die beiden Ventilglieder nebeneinander liegen. Dadurch ergibt sich bei der Kraftübertragung die zum Aufsetzen beider Ventilglieder notwendige Beweglichkeit und der wünschenswerte Effekt, dass der Kraftübertragungspunkt zwischen den Flächen kaum aus der Mitte auswandert.

Die konkave oder konvexe Bogenkrümmung kann eine Kreisbogenkrümmung sein, und zwar entweder Teil einer Zylinderfläche mit zur Ebene der Ventilglieder senkrechter Zylinderachse, oder Teil einer Kugelfläche mit dem Zentrum der Kugel in der Achse des Ankers, des Ankerstößels und/oder des Schafts. Die Ausbildung dieser Flächen ist herstellungstechnisch einfach.

In der Paarung konkav/konvex können die Bogenkrümmungen gleich oder die konvexe Bogenkrümmung stärker als die konkave Bogenkrümmung sein. Es ergibt sich dadurch keine flächige Kraftübertragung, sondern eine Kraftübertragung mit Punkt- oder Linienberührung, was jedoch für die Beweglichkeit im Kippgelenk von Vorteil ist.

Alternativ können im Kippgelenk auch ebene erste und zweite Anlageflächen vorgesehen sein, wobei die eine Anlagefläche deutlich kleiner ist als die andere und beispielsweise an einem zentrischen Fortsatz gebildet wird. Dies resultiert in einer Beweglichkeit ähnlich einem Kugelgelenk ohne zu starkes seitliches Auswandern des Kraftübertragungspunktes.

Bei einer weiteren, zweckmäßigen Ausführungsform ist im Kippgelenk zwischen den Anlageflächen eine Gelenkkugel angeordnet, was der Beweglichkeit im Kippgelenk auch bei Schrägstellung des Kraftübertragungsgliedes zu Gute kommt.

Bei Verwendung einer Gelenkkugel sind folgende geometrische Paarungen der ersten und zweiten Anlageflächen zweckmäßig: Eben/eben oder eben/konkav oder eben/ konvex oder konkav/konkav oder konkav/konvex oder konvex/konvex.

Um die Gelenkkugel sicher positionieren zu können, ist es zweckmäßig, in wenigstens einer Anlagefläche einen zentrischen, vertieften Kugelsitz mit einem Durchmesser kleiner als den Kugeldurchmesser vorzusehen. Allfällige Bewegungen finden dann zwischen der anderen Anlagefläche und der Gelenkkugel statt.

Die ersten und zweiten Anlageflächen können unterschiedlich groß bemessen sein.

Die Schiebeführung ist zweckmäßig als wenigstens eine Gleitlagerbuchse ausgebildet, die in einer Aufnahmebohrung des festen Kernteils des Magneten sitzt. Das Kraftübertragungsglied wird mit dem z.B. zylindrischen Schaft in der Gleitlagerbuches geführt, wobei das Sicherheitsspiel zwischen dem Schaft und der Gleitlagerbuchse vorgesehen ist.

Dieses Sicherheitsspiel kann ca. 2 % des Innendurchmessers der Schiebeführung betragen. Dies resultiert in einer relativ losen Gleitpassung, die jedoch für ein Magnetdoppeiventii, bei dem beide Ventilglieder von einem Magneten über das Kippgelenk in die Schließpositionen verstellt werden, zweckmäßig ist.

Schließlich wird ein baulich einfaches Konzept einer Ventileinsatzbaugruppe erzielt, wenn jedes Ventilglied in einer Einsatzhülse angeordnet wird, oberhalb der eine Einschraubhülse vorgesehen ist, in der ein Betätigungsstößel für das Ventilglied geführt wird. Das Kraftübertragungsglied liegt der Einschraubhülse mit einem Abstand gegenüber, der durch einen Überstand des Betätigungsstößels über die Einschraubhülse so groß bemessen ist, dass bei Erreichen der Schließpositionen der Ventilglieder zwischen dem Kraftübertragungsglied und den Einschraubhülsen ein Zwischenraum verbleibt und das Kraftübertragungsglied nicht auf Anschlag an einer stationären Fläche kommt.

Anhand der Zeichnungen werden Ausführungsformen des Erfindungsgegenstandes erläutert. Es zeigen:
- Fig. 1: einen Teillängsschnitt eines Magnetdoppelventils (zwei 2/2-Wegeventile) mit erregtem Magneten,
- Fig. 1A: einen Teillängsschnitt eines anderen Magnetdoppelventils (zwei 3/2-Wegeventile), mit erregtem Magneten, und
- Fig. 2 bis 18: verschiedene Varianten eines Kippgelenks für das Magnetdoppelventil, wobei Fig. 2, 6 und 7 das in den Fig. 1 und 1A gezeigte Kippgelenk verdeutlichen.

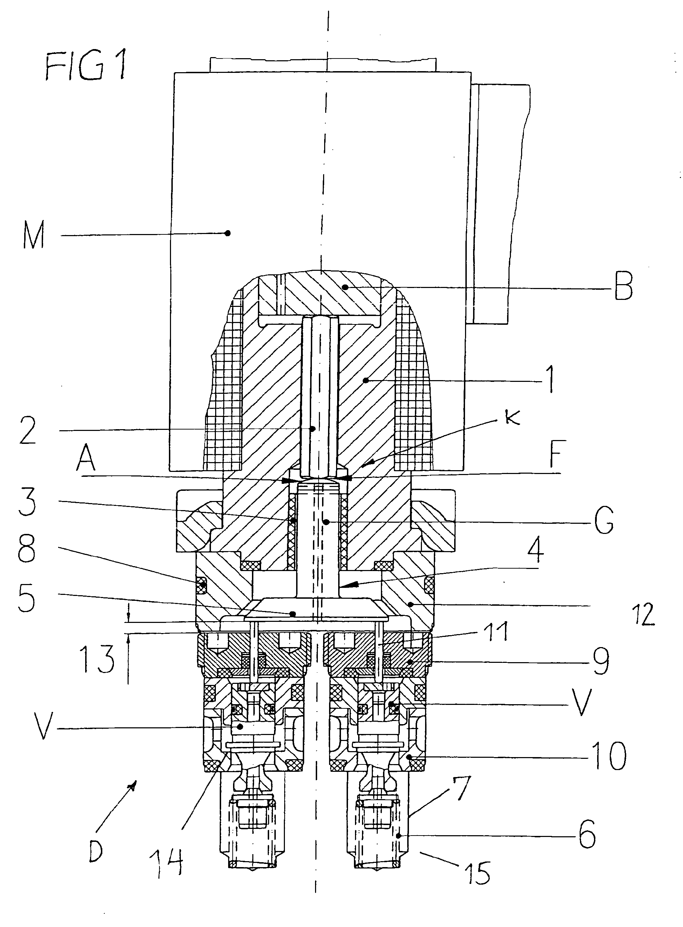

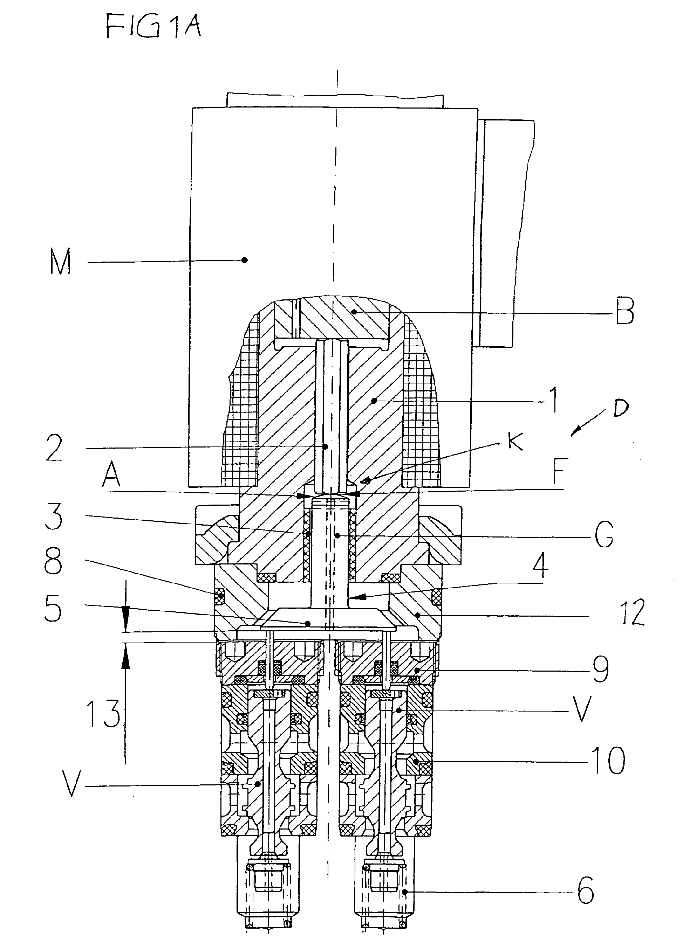

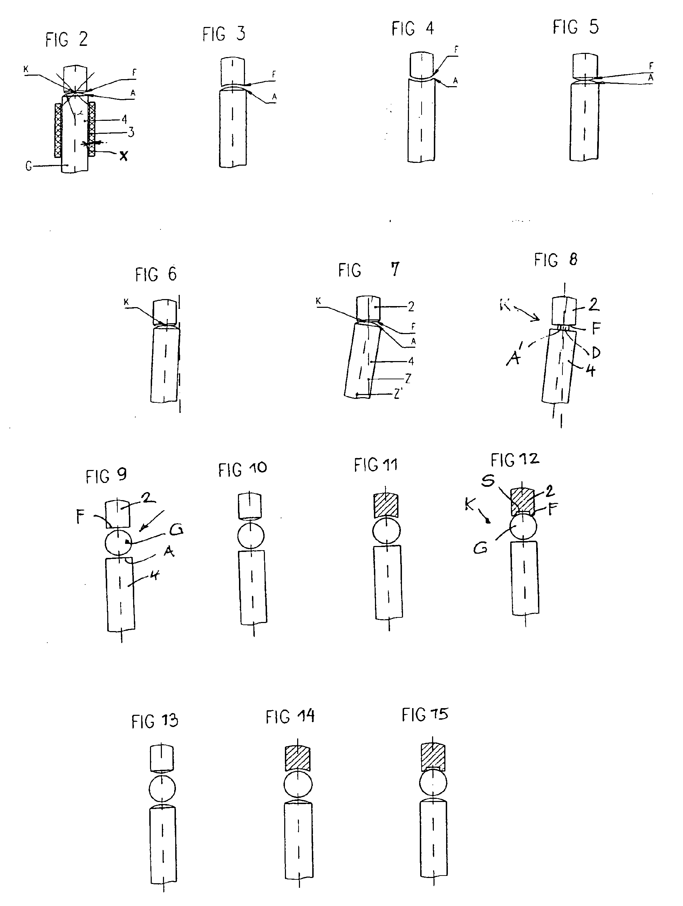

Fig. 1 zeigt ein Magnetdoppelventil D, z.B., einen Doppel-Ventileinsatz, zum Einbau in mit Strömungskanälen verbundene Aufnahmebohrungen eines Hydraulik-Ventilblocks 15, in welchem zwei in einer Ebene (in Fig. 1 in der Zeichenebene) nebeneinander liegende Ventilglieder V bestimmte Ventilfunktionen zu erfüllen haben. Die beiden Ventilglieder V werden durch einen gemeinsamen Magneten M, hier einem Kurzhubmagneten, betätigt, um gegen Federkraft aus Öffnungspositionen in ihre gezeigten Schließpositionen auf Sitze 14 verstellt und mit bestimmten Schließkräften gehalten zu werden.

Der Magnet enthält einen Anker B und einen in einem festen Kernteil 1 verschiebbaren Ankerstößel 2, der ein Kraftübertragungsglied G mit der Magnetkraft beaufschlagt, um die beiden Ventilglieder V zu betätigen. Das Kraftübertragungsglied G ist T-förmig ausgebildet und mit einem Schaft 4 in einer Schiebeführung 3 im festen Kernteil 1 verschiebbar geführt. Der Schaft 4 ist mit einem Querteil 5 einstückig vereinigt.

Die Ventilglieder V sind Sitzventilglieder, die jeweils in einer Einsatzhülse 10 abgedichtet verschieblich geführt sind und Sitzen 14 gegenüberliegen. Die Einsatzhülsen 10 werden in Bohrungen des Blocks 15 mit den Ventilgliedem V abgedichtet eingebaut, wobei die Ventilglieder V von in Strömungskanälen 7 angeordneten Federn 6 in Abheberichtung von den Sitzen 14 beaufschlagt werden. Oberhalb der Einsatzhülsen 10 werden Einschraubhülsen 9 eingebracht, die die Einsatzhülsen 10 in den Einbaupositionen fixieren. In den Einschraubhülsen 9 sind Betätigungsstößel 11 für die Ventilglieder V abgedichtet geführt. Jeder Betätigungsstößel 11 ragt über die Oberseite der Einschraubhülse 9 hinaus und arbeitet mit dem Querteil 5 des Kraftübertragungsglieds G zusammen. Der Überstand der Betätigungsstößel 11 ist so gewählt, dass selbst bei erregtem Magneten und auf den Sitzen 14 gehaltenen Ventilgliedem V (Schließpositionen) die Unterseite des Querteils 5 des Kraftübertragungsgliedes G einen Abstand 13 zu den Oberseiten der Einschraubhülsen 9 einhält, und nicht auf Anschlag kommt. Der Magnet M kann über einen Zwischenring 12 mit einer Abdichtung 8 ebenfalls in den Block 15 eingesetzt sein. Die Schiebeführung 3 ist wenigstens eine Gleitlagerbuchse für den Schaft 4.

Alternativ könnte der Anker B direkt auf das Kraftübertragungsglied G einwirken.

Das Doppelmagnetventil D in Fig. 1A enthält als die beiden Ventilglieder V ebenfalls Sitzventilglieder, deren jedes abwechselnd mit einem oberen und einem unteren Sitz zusammenarbeitet (zwei 3/2-Wegeventil-Funktionen). Die oberen Schließpositionen werden von den Federn 6 eingestellt, die unteren hingegen durch den einzigen Magneten M.

In jeder Ausführungsform ist zwischen dem Anker B bzw. dem Ankerstößel 2 und dem Schaft 4 ein Kippgelenk K oberhalb der Schiebeführung 3 vorgesehen, das im Detail wie in den Fig. 2 - 18 gezeigt gestaltet sein kann.

Fig. 2 ist eine Detailschnittansicht zu Fig. 1 oder Fig. 1A zur Hervorhebung des Zusammenspiels zwischen dem Ankerstößel 2 und dem Schaft 4 des Kraftübertragungsglieds G im Kippgelenk K. Der Schaft 4 weist in dieser Ausführungsform eine in der Zeichenebene, d.h. der durch die Achsen der beiden Ventilglieder V in Fig. 1, Fig. 1A definierten Ebene, konvex gekrümmte Anlagefläche auf. Die Anlagefläche ist beispielsweise Teil einer Zylinderfläche mit einer Zylinderachse Y senkrecht zur Ebene der beiden Ventilglieder V, oder ist Teil einer Kugelfläche (Kugelzentrum Y). Der Ankerstößel 2 hat eine ebene Gegenfläche F, die senkrecht zur Stößelachse liegt. Der Schaft 4 ist mit einem radialen Sicherheitsspiel X in der Schiebeführung 3 aufgenommen. Das Sicherheitsspiel X beträgt beispielsweise etwa 2 % des Innendurchmessers der Schiebeführung 3. Bei einem Innendurchmesser von etwa 5 mm ist das gesamte Sicherheitsspiel ca. 0,1 mm.

Die Gegenfläche F kontaktiert zum Übertragen der Magnetkraft die Anlagefläche A, so dass das Kippgelenk K gebildet ist. Solange der Schaft 4 koaxial zum Ankerstößel 2 ist, wird die Magnetkraft über das Kippgelenk K zentrisch übertragen. Die Anlagefläche A ist z.B. größer als die Gegenfläche F. Die beiden Flächen könnten auch gleich groß sein.

In Fig. 3 ist die Anlagefläche A konvex gekrümmt (Zylinderfläche oder Kugelfläche), und ist auch die Gegenfläche F gleichsinnig gekrümmt, d.h. konkav (zylindrisch oder kugelig), gegebenenfalls mit größerem Krümmungsradius als die Anlagefläche A.

In Fig. 4 ist die Anlagefläche A konkav gekrümmt (zylindrisch oder kugelig), während die Gegenfläche F konvex gekrümmt ist (zylindrisch oder kugelig).

In Fig. 5 sind sowohl die Anlagefläche A als auch die Gegenfläche F konvex gekrümmt (kugelig oder zylindrisch), d.h. gegensinnig konvex.

Es ist nicht erforderlich, dass die ganze Gegenfläche F bzw. die ganze Anlagefläche A konvex oder konkav gekrümmt ist. Da das Sicherheitsspiel X in Relation zur Länge des Schafts 4 relativ klein ist, kann sich das Kraftübertragungsglied G ohnedies nur in einem beschränkten Ausmaß schräg stellen, so dass es ausreichen würde, jeweils nur einen mittigen Bereich der Anlagefläche A und/oder der Gegenfläche F konvex oder konkav zu formen.

Die Fig. 6 und 7 verdeutlichen, was passiert, falls das in Fig. 1, Fig. 1A linke Ventilglied V einen höheren Widerstand leistet bzw. seine Schließposition früher einnimmt als das andere Ventilglied V. Der Schaft 4 kippt mit seiner Achse Z in Relation zu der durch den Ankerstößel 2 festgelegten Bewegungsachse Z' des Ankers im Uhrzeigersinn, und zwar im Rahmen des Sicherheitsspiels X. Dies bewirkt, dass entweder (Fig. 6) der Kontaktpunkt zum Übertragen der Magnetkraft im Kippgelenk K aus der zentrischen Lage von Fig. 2 etwas nach links verlagert und die Magnetkraft demzufolge etwas außermittig übertragen wird, oder (Fig. 7), die Anlagefläche A an der Gegenfläche F nach rechts gleitet, wenn der Schaft 4 kippt, und die Magnetkraft dann wiederum weitgehend zentrisch übertragen wird. Dadurch (Fig. 6, 7) wird eine Klemmung bzw. Hemmung des Schafts 4 in der Schiebeführung 3 vermieden. Beide Ventilglieder V werden zuverlässig in ihre Schließpositionen gebracht, selbst wenn die Ventilsitze in unterschiedlichen Höhenlagen liegen sollten.

Wird der Magnet M entregt, dann drücken die Federn 7 die Ventilglieder in ihre Öffnungspositionen und über die Betätigungsstößel auch das Kraftübertragungsglied G, den Ankerstößel 2, und schließlich den Anker B zurück in die Ausgangsstellung. Dabei richtet sich das Kraftübertragungsglied G im Kippgelenk K selbsttätig wieder aus.

In Fig. 8 wird das Kippgelenk K gebildet durch die ebene Gegenfläche F am Ankerstößel 2 und durch eine dieser gegenüber deutlich kleinere, z.B. ebene, Anlagefläche A', die zentrisch an einem mittig geformten Fortsatz D des Schafts 4 gebildet ist. In der gezeigten Kipplage des Schafts 4 wandert der Magnetkraft-Übertragungspunkt nur ganz wenig zur Seite. Der Fortsatz D könnte umgekehrt auch am Ankerstößel 2 geformt sein.

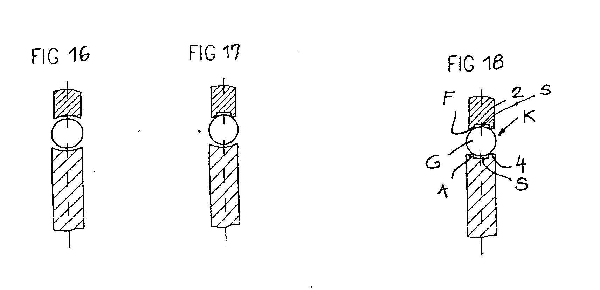

In den Fig. 9 bis 18 ist im Kippgelenk eine Gelenkkugel G zwischen den Anlage- und Gegenflächen A, F platziert, wobei die Flächen in folgenden geometrischen Paarungen ausgebildet sein können: Eben/eben in Fig. 9; eben/konvex in Fig. 10; eben/konkav in Fig. 11; eben/eben mit einer oder zwei zentrischen Kugelsitzvertiefung(en) S in Fig. 12 und Fig. 18; konvex/konvex in Fig. 13; konkav/konvex in Fig. 14; eben/konvex oder eben/konkav mit einer zentrischen Kugelsitzvertiefung S in Fig. 15 oder Fig. 17; und konkav/konkav in Fig. 16.

Der Durchmesser der Gelenkkugel G entspricht in etwa dem Durchmesser des Ankerstößels 2 und/oder des Schafts 4. Die Gelenkkugel G könnte auch etwas kleiner und im Schaft 4 oder im Ankerstößel 2 versenkt und/oder verstemmt und/oder eingepresst fest positioniert sein, und so eine konvexe Fläche, ähnlich wie in Fig. 2, im Kippgelenk K bilden.

## Patentansprüche

1. Magnetdoppelventil (D), mit zwei nebeneinander liegenden Ventilgliedern (V), die gegen Federkraft (6) durch einen gemeinsamen Magneten (M) über ein mit einem Schaft (4) in einer Schiebeführung (3) geführtes, T-förmiges Kraftübertragungsglied (G) in Schließrichtung betätigbar sind, **dadurch gekennzeichnet, dass** zwischen der Schiebeführung (3) und dem Schaft (4) ein radiales Sicherheitsspiel (X) vorgesehen ist, so dass, das Kraftübertragungsglied sich in der Schiebeführung (3) schrägstellen kann und dass an der den Ventilgliedern (V) abgewandten Seite der Schiebeführung (3) zwischen dem Schaft (4) des Kraftübertragungsgliedes (G) und dem Anker (B) oder einem beweglich geführten Ankerstößel (2) des Magneten (M) ein Kippgelenk (K) vorgesehen ist.

2. Magnetdoppelventil nach Anspruch 1, **dadurch gekennzeichnet, dass** das Kippgelenk (K) am Anker (B) oder an dem Ankerstößel (2) und am Schaft (4) direkt oder indirekt einander kontaktierende erste und zweite Anlageflächen (A, F) in der geometrischen Paarung: Eben/konvex oder konkav/konkav oder konvex/konkav oder konvex/konvex, umfasst, wobei die jeweils konvexe oder konkave Anlagefläche (A, F) zumindest eine Bogenkrümmung in der Ebene aufweist, in der die beiden Ventilglieder (V) nebeneinander liegen.

3. Magnetdoppelventil nach Anspruch 2, **dadurch gekennzeichnet, dass** die konkave oder konvexe Bogenkrümmung eine Kreisbogenkrümmung ist, deren Krümmungszentrum (Y) in der Achse des Ankers (B) bzw. Ankerstößels (2) und/oder des Schafts (4) liegt, vorzugsweise ein Teil einer Zylinderfläche mit zur Ebene der Ventilglieder (V) Senkrechter Zylinderachse (Y).

4. Magnetdoppelventil nach Anspruch 2, **dadurch gekennzeichnet, dass** die jeweils konvexe oder konkave Anlagefläche (A, F) Teil einer Kugelfläche mit dem Zentrum (Y) in der Achse des Ankers (B) bzw. Ankerstößels (2) und/oder des Schafts (4) ist.

5. Magnetdoppelventil nach Anspruch 2, **dadurch gekennzeichnet, dass** in der geometrischen Paarung konkav/konvex die Bogenkrümmungen gleich sind oder die konvexe Bogenkrümmung stärker als die konkave Bogenkrümmung ist.

6. Magnetdoppelventil nach Anspruch 1, **dadurch gekennzeichnet, dass** das Kippgelenk (K) aus einer ebenen Anlagefläche (F) am Schaft (4) oder am Anker (B) bzw. am Ankerstößel (2) und einer ebenfalls ebenen Anlagefläche (A') mit gegenüber der Gegenfläche (F) kleinerem Durchmesser an einem zentrischen Fortsatz (D) der jeweils anderen Komponente von dem Anker (B) bzw. dem Ankerstößel (2) oder dem Schaft (4) gebildet ist.

7. Magnetdoppelventii nach Anspruch **2, dadurch gekennzeichnet, dass** im Kippgelenk (K) zwischen der Anlagefläche und der Gegenfläche (A, F) eine Gelenkkugel (G) angeordnet ist.

8. Magnetdoppelventil nach Anspruch 7, **dadurch gekennzeichnet, dass** die die Gelenkkugel (G) zwischen sich einschließenden Anlageflächen (A, F) in der geometrischen Paarung: Eben/eben oder eben/konkav oder eben/konvex oder konkav/konkav oder konkav/konvex oder konvex/konvex, ausgebildet sind.

9. Magnetdoppelventil nach Anspruch 8, **dadurch gekennzeichnet, dass** zumindest eine eben ausgebildete Anlagefläche (A, F) eine zentrische Kugelsitzvertiefung (S) mit einem Durchmesser kleiner als dem Kugeldurchmesser aufweist.

10. Magnetdoppelventil nach wenigstens einem der Ansprüche 2-9, **dadurch gekennzeichnet, dass** die Anlageflächen (A', A, F) unterschiedlich groß sind.

11. Magnetdoppelventil nach Anspruch 1, **dadurch gekennzeichnet, dass** die Schiebeführung (3) wenigstens eine Gleitlagerbuchse ist, die in einer Aufnahmebohrung eines festen Kernteils (1) des Magneten (M) sitzt, dass das Kraftübertragungsglied (G) mit einem zylindrischen Schaft (4) die Gleitlagerbuchse durchsetzt, und dass das Sicherheitsspiel (X) zwischen dem Schaft (4) und der Gleitlagerbuchse gebildet ist.

12. Magnetdoppelventil nach Anspruch 1, **dadurch gekennzeichnet, dass** das Sicherheitsspiel (X) ca. 2 % des Innendurchmessers der Schiebeführung (3) beträgt.

13. Magnetdoppelventil nach Anspruch 1, **dadurch gekennzeichnet, dass** jedes Ventilglied (V) in einer Einsatzhülse (10) angeordnet ist, dass oberhalb der Einsatzhülse (10) eine Einschraubhülse (9) vorgesehen ist, in der ein Betätigungsstößel (11) geführt ist, dass das Kraftübertragungsglied (G) der Einschraubhülse (9) mit einem Abstand (13) gegenüberliegt, und dass der Betätigungsstößel (11) so weit über die Einschraubhülse (9) vorsteht, dass bei erregtem Magneten (M) und erreichter Schließposition des Ventilgliedes (V) zwischen dem Kraftübertragungsglied (G) und der Einschraubhülse ein Zwischenraum verbleibt.

## Claims

1. Twin-solenoid valve (D) comprising two valve members (V) which are located side by side and are actuated in closing direction by a common solenoid (M) via a T-shaped force transmission member (G), the force transmission member (G) being guided by a stem (4) in a slide guidance (3), **characterised In that** a radial safety clearance (X) is provided between the slide guidance (3) and the stem (4) so that the force transmission member is able to take an inclined position in the slide guidance, and that at the side of the slide guidance (3) remote from the valve members (V) a tilt joint (K) is provided between the stem (4) of the force transmission member (G) and the armature (B) or a movably guided armature ram (2) of the solenoid (M).

2. Twin-solenoid valve as in claim 1, **characterised in that** the tilt joint (K) includes directly or indirectly contacting first and second abutment surfaces and counter surfaces (A, F) at the armature (B) or at the armature ram (2) and at the stem (4), the surfaces (A, F) having one of the following geometrical pairings: planar/convex or concave/concave or convex/concave or convex/convex, and that the respective convex or concave abutment surface or counter surface (A, F) has at least a arc curvature within the plane in which both valve members (V) are situated side by side.

3. Twin-solenoid valve as in claim 2, **characterised in that** the concave or convex arc curvature is a circular arc curvature the curvature centre (Y) of which being situated in the axis of the armature (B) or the armature ram (2) and/or of the stem (4), preferably as a part of a cylinder surface having a cylinder axis (Y) perpendicular to the plane of the valve members (V).

4. Twin-solenoid valve as in claim 2, **characterised in that** the respective convex or concave abutment surface or counter surface (A, F) is formed as a part of a spherical surface having the centre (Y) in the axis of the armature (B) or the armature ram (2) and/or of the stem (4).

5. Twin-solenoid valve as in claim 2, **characterised in that** in the geometrical pairing concave/convex the arc curvatures are made equal or that the convex arc curvature is stronger than the concave arc curvature.

6. Twin-solenoid valve as in claim 1, **characterised in that** the tilt joint (K) is formed by a planar abutment surface (F) either at the stem (4) or at the armature (B) or at the armature ram (2) and a planar abutment surface (A') at a central projection (D) of the respective other component of the armature (B) or the armature ram (2) or the stem (4), the planar abutment surface (A') having a smaller diameter than the counter surface (F).

7. Twin-solenoid valve as in claim 2, **characterised in that** a joint ball (G) is arranged within the tilt joint (K) between the abutment surface (A) and the counter surface (F).

8. Twin-solenoid valve as in claim 7, **characterised in that** the joint ball (G) is provided between the abutment surface (F) and the counter surface (F) having one of the following geometrical pairings: planar/planar or planar/concave or planar/convex or concave/concave or concave/convex or convex/convex.

9. Twin-solenoid valve as in claim 8, **characterised in that** at least one abutment surface or counter surface (A, F) of planar form comprises a central ball seat depression (S) having a diameter smaller than the diameter of the joint ball.

10. Twin-solenoid valve as in at least one of claims 2 to 9, **characterised in that** the abutment surfaces and counter surfaces (A, F, A') have differing sizes.

11. Twin-solenoid valve as in claim 1, **characterised in that** the slide guidance (3) is constituted by at least one plain bearing sleeve which is fitted in a receiving bore of a fixed core part (1) of the solenoid (M), that the force transmitting member (G) penetrates the plain bearing sleeve with a cylindrical stem (4), and that the safety clearance (X) is formed between the stem (4) and the plain bearing sleeve.

12. Twin-solenoid valve as in claim 1, **characterised in that** the safety clearance (X) amounts to about 2% of the inner diameter of the slide guidance (3).

13. Twin-solenoid valve as in claim 1, **characterised in that** each valve member (V) is arranged within an inserted sleeve (10), that a screw-in sleeve (9) is arranged above the inserted sleeve (10), that an actuating ram (11) is guided in the screw-in sleeve (9), that the force transmitting member (G) faces the screw-in sleeve (9) with a distance, and that the actuating ram projects beyond the screw-in sleeve (9) such that with the solenoid (M) energized and already reached closing position of the valve member (V) an intermediate space remains between the force transmitting member (G) and the screw-in sleeve (9).

## Revendications

1. Soupape double électromagnétique (D) comprenant deux organes de soupape (V) juxtaposés, actionnables dans la direction de fermeture contre une force de ressorts (6) par un aimant commun (M) par l'intermédiaire d'un organe de trans-mission des forces en T (G), guidé par une tige (4) dans un guide de coulisse (3), **caractérisée en ce qu'**un jeu de sécurité radial (X) est prévu entre le guide de coulisse (3) et la tige (4), de sorte que l'organe de transmission des forces peut se placer en oblique dans le guide de coulisse (3), et qu'une articulation basculante (K) est prévue sur le côté, opposé aux organes de soupape (V), du guide de coulisse (3) entre la tige (4) de l'organe de transmission des forces (G) et l'induit (B) ou un poussoir d'induit (2) guidé mobile de l'aimant (M).

2. Soupape double électromagnétique suivant la revendication 1, **caractérisée en ce que** l'articulation basculante (K) comprend, sur l'induit (B) ou sur le poussoir d'induit (2) et sur la tige (4), une première et une seconde surface de contact (A, F) directement ou indirectement au contact l'une de l'autre, dans l'appariement géométrique suivant : plan/convexe ou concave/concave ou convexe/concave ou convexe/convexe, la surface de contact respectivement convexe ou concave (A, F) présentant au moins une courbure en arc dans le plan, dans lequel se situent en juxtaposition les deux organes de soupape (V).

3. Soupape double électromagnétique suivant la revendication 2, **caractérisée en ce que** la courbure en arc concave ou convexe est une courbure en arc de cercle, dont le centre de courbure (Y) se situe dans l'axe de l'induit (B) et/ou du poussoir d'induit (2) et/ou de la tige (4), est de préférence une partie d'une surface cylindrique avec un axe de cylindre (Y) perpendiculaire au plan des organes de soupape (V).

4. Soupape double électromagnétique suivant la revendication 2, **caractérisée en ce que** la surface de contact respectivement convexe ou concave (A, F) est une partie d'une surface sphérique avec le centre (Y) dans l'axe de l'induit (B) ou du poussoir d'induit (2) et/ou de la tige (4).

5. Soupape double électromagnétique suivant la revendication 2, **caractérisée en ce que,** dans l'appariement géométrique concave/convexe, les courbures en arc sont égales ou la courbure en arc convexe est plus forte que la courbure en arc concave.

6. Soupape double électromagnétique suivant la revendication 1, **caractérisée en ce que** l'articulation basculante (K) est formée d'une surface de contact plane (F) sur la tige (4) ou sur l'induit (B) ou sur le poussoir d'induit (2) et d'une surface de contact (A') également plane, d'un diamètre plus petit que celui de la surface antagoniste (F), sur un prolongement centré (D) de l'autre composant respectif de l'induit (B) ou du poussoir d'induit (2) ou de la tige (4).

7. Soupape double électromagnétique suivant la revendication 2, **caractérisée en ce qu'**une bille d'articulation (G) est disposée dans l'articulation basculante (K) entre la surface de contact et la surface antagoniste (A, F).

8. Soupape double électromagnétique suivant la revendication 7, **caractérisée en ce que** les surfaces de contact (A, F), qui renferment entre elles la bille d'articulation (G), sont configurées dans l'appariement géométrique suivant : plan/plan ou plan/concave ou plan/convexe ou concave/concave ou concave/convexe ou convexe/convexe.

9. Soupape double électromagnétique suivant la revendication 8, **caractérisée en ce qu'au** moins une surface de contact (A, F) de configuration plane comporte un creux de siège sphérique centré (S) de diamètre plus petit que le diamètre de la bille.

10. Soupape double électromagnétique suivant l'une au moins des revendications 2 à 9, **caractérisée en ce que** les surfaces de contact (A', A, F) sont de dimensions différentes.

11. Soupape double électromagnétique suivant la revendication 1, **caractérisée en ce que** le guide de coulisse (3) est au moins un coussinet lisse, qui se situe dans un trou de réception d'une partie de noyau fixe (1) de l'aimant (M), que l'organe de transmission des forces (G) traverse par une tige cylindrique (4) le coussinet lisse, et que le jeu de sécurité (X) est formé entre la tige (4) et le coussinet lisse.

12. Soupape double électromagnétique suivant la revendication 1, **caractérisée en ce que** le jeu de sécurité (X) est d'environ 2% du diamètre intérieur du guide de coulisse (3).

13. Soupape double électromagnétique suivant la revendication 1, **caractérisée en ce que** chaque organe de soupape (V) est disposé dans une douille de réduction (10), qu'un manchon fileté (9), dans lequel est guidé un poussoir d'actionnement (11), est prévu au-dessus de la douille de réduction (10), que l'organe de transmission des forces (G) est en vis-à-vis du manchon fileté (9) avec un écartement (13), et que le poussoir d'actionnement (11) dépasse suffisamment du manchon fileté (9) pour qu'un espace intermédiaire subsiste entre l'organe de transmission des forces (G) et le manchon fileté lorsque l'aimant (M) est excité et que la position de fermeture de l'organe de soupape (V) est atteinte.
